# EUROPEAN PATENT APPLICATION

(11) **EP 4 592 654 A1**
(43) Date of publication of application: **30.07.2025**
(21) Application number: 24154512.8
(22) Date of filing: 29.01.2024
(51) Int. Cl.: G01J 3/28, G06N 5/00, G06N 20/00, G01J 3/18

(54) **IMPROVED PEAK DETECTION**

(71) Applicant: Sentea, 9052 Gent (BE)
(72) Inventor: Verhaegen, Karsten, 9052 Gent (BE); Dobbelaere, Dieter, 9052 Gent (BE); De Clercq, Jarne, 9052 Gent (BE)
(74) Representative: Patentales BV

(57) **Abstract**

The invention provides, amongst other aspects, a method for detecting peaks in an optical spectrum, the method comprising the steps of obtaining the optical spectrum from at least one optical spectrometer, the optical spectrum comprising a wavelength range; and applying a trained neural network, NN, on the optical spectrum to detect the peaks in the optical spectrum, wherein the detecting of peaks relates to output nodes of the NN having been trained w.r.t zones corresponding to subranges of the wavelength range. Further provided is a device carrying out the method, the device preferably comprising a memory including the trained NN. Further provided is a trained NN having been trained w.r.t zones corresponding to subranges of the wavelength range.

## Description

### Field of the invention

The present invention relates to the technical domain of improved peak detection in an optical spectrum, particularly by applying a trained neural network (NN) on the optical spectrum to detect the peaks in predefined zones relating to ranges in the optical spectrum.

### Background art

In fiber optic sensing, the detection of peaks in optical spectra lies at the basis of measuring several physical quantities at the sensor location, such as temperature, strain, pressure, etc. Current peak detection algorithms in spectrometry often rely on a weighted average of selected detectors to identify and characterize spectral peaks. However, these algorithms face limitations, particularly in situations where the number of distinguishable peaks is constrained due to the risk of overlap or interference. This is a common challenge when spectrometers exhibit limited resolution, indicated by a restricted number of channels available for spectral measurement. Moreover, the problem is exacerbated in spectrometers with methods to overcome limited channels, for example, arrayed waveguide gratings (AWGs) with overlapping channels as seen in integrated photonics applications.

Additionally, the existing algorithms typically suffer from inadequate handling of spectrometer crosstalk, where signals from detectors not taken into account contribute to erroneous peak identification. Spectrometer crosstalk, especially in densely populated or low-resolution spectrometers or those integrated with photonics components, can lead to inaccurate peak detection, and compromise the reliability of spectral analysis.

Related methods are disclosed in US20190390985A1 and NL2016744B1. However, these relate to post-processing and are overly complex and/or lack accuracy and/or are only adapted to optical spectra with a fixed number of peaks.

These challenges highlight the need for improved methods that can overcome the aforementioned limitations.

The present invention aims at addressing issues, such as the issues mentioned above.

### Summary of the invention

According to a first aspect, the present invention provides a method for detecting peaks in an optical spectrum, the method comprising the steps of:
- obtaining the optical spectrum from at least one optical spectrometer, the optical spectrum comprising a wavelength range; and
- applying a trained neural network, NN, on the optical spectrum to detect the peaks in the optical spectrum,
wherein the detecting of peaks relates to output nodes of the NN having been trained w.r.t zones corresponding to subranges of the wavelength range.

Prior art models are limited by the fixed number of peaks that can be detected and/or suffer from high complexity and inefficiency. Thus, from a design viewpoint, increasing the number of detectable peaks is of high practical value, especially if the number of detectable peaks can be increased without requiring the number of detectors and channels in the spectrometer to be increased, as the latter would increase the overall hardware cost significantly. The inventors have surprisingly found that the detecting of peaks using the trained NN can be improved by introducing zones in the training dataset or training procedure. Moreover, by using zones, a more efficient NN can be developed which is not limited to a fixed number of peaks, thereby providing an adaptable approach while improving the performance (e.g., accuracy) of detecting peaks. As a result, the present invention can provide at least one of: reduced sensitivity to spectrometers crosstalk, reduced number of detectors, improved system resolution, an automated detection and identification of more peaks, improved wavelength accuracy, and faster data processing for faster peak detection.

One challenge lies in the manual choice of zones (i.e., the number and/or width of zones). Furthermore, the actual number of peaks and/or the actual spectral range for each peak (e.g., wavelength range) may not be known beforehand. Thus, by applying the NN which has been trained w.r.t zones, these challenges can be overcome.

According to a second aspect, the present invention provides a device comprising means for carrying out the method for detecting peaks according to the invention.

According to a third aspect, the present invention provides a system comprising:
- a device according to the invention; and
- at least one optical spectrometer, wherein the device is configured to perform the steps of the method according to the invention of:
   - obtaining the optical spectrum from at least one optical spectrometer, the optical spectrum comprising a wavelength range; and
   - applying a trained neural network, NN, on the optical spectrum to detect the peaks in the optical spectrum,
   wherein the detecting of peaks relates to a plurality of output nodes of the NN having been trained w.r.t zones corresponding to subranges of the wavelength range.

Such a system may advantageously allow the use of any optical spectrometer (i.e., having overlapping and/or non-overlapping channels). In addition to the advantages provided by the method for detecting peaks, as described above, by integrating the device with at least one optical spectrometer, the invention may further provide improved integrated photonics allowing for a miniaturized and portable spectroscopic system by reducing the overall hardware footprint, whereby an external additional device for performing the analysis is not necessary.

According to a fourth aspect, the present invention provides a trained neural network, NN, the NN having been trained with respect to (w.r.t) zones corresponding to subranges of a wavelength range in optical spectra.

Preferred embodiments and their advantages are provided in the description and the dependent claims.

### Brief description of the drawings

The present invention will be discussed in more detail below, with reference to the attached drawings.
Fig. 1 shows a first example of a system or method according to the invention.
Fig. 2 shows a second example of a system or method according to the invention.
Figs. 3a and 3b show a third example of a method according to the invention.
Fig. 4 shows a fourth example of a method according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "zone" corresponds to a subrange of the full range of an optical spectrum, such as a frequency subrange or a wavelength subrange. The term zone may refer to a bucket or bin corresponding to said subrange. For the purpose of analysis, the optical spectrum may be divided into any number of intervals (i.e., subranges), which correspond to zones, which may be referred to as binning or bucketing. It will be understood that the width of the zones defines how close (consecutive) peaks can get to each other. Furthermore, it will be understood that in any embodiment the terms relating to a wavelength range and/or subrange may be interchanged with the terms frequency range and/or subrange, respectively.

The term "channel" relates to different regions within the optical spectrometer that are sensitive to specific wavelengths or energy levels. Thus, a channel is used herein to describe ranges within a spectrum, which may be associated with the spectrometer. It will be understood that the channels may be predefined by the spectrometer and represent specific ranges that the spectrometer is capable of detecting.

The term "detector" refers to an element or device that measures at least the intensity of light which is captured by or falls on the detector. The detector may be comprised in the optical spectrometer or connected to it,

The term "peak" refers to a localized region of an optical spectrum where the intensity of a detected signal is significantly higher than the surrounding wavelengths. Thus, the term "peak detection" refers to detecting the wavelength of a peak. The wavelength of the peak can be, for example, the wavelength of the maximum value of the peak or the wavelength of the center of mass of the peak, etc.

In embodiments, the optical spectrum comprises two or more neighboring peaks, preferably two or more overlapping peaks.

In embodiments, the optical spectrum is a concatenation of optical spectra obtained from at least two optical spectrometers.

In this document, a "light source" may be any source of visible or invisible light. In embodiments, the light source may relate to at least one of a laser diode (LD), a light emitting diode (LED), a superluminescent LED (SLED), a semiconductor optical amplifier (SOA), a reflective SOA (RSOA), an Erbium-doped fiber amplifier (EDFA), a microresonator-based light source. In embodiments, the light source may include at least one amplifier from the group of an SOA, a RSOA, an EDFA, a Raman amplifier, a travelling-wave optical amplifier (TWA), an optical parametric amplifier (OPA).

In embodiments, the detecting of peaks relates to output nodes of the NN having been trained w.r.t at least one zone corresponding to a subrange of the wavelength range, preferably two or more zones corresponding to subranges of the wavelength range. The number of zones may be at least 1, or at least 2, or at least 3, or at least 4, or at least 5, or at least 6, or at least 7, or at least 8, or at least 9, at least 10, or at least 20, or at least 30, or at least 40, or at least 50, or at least 60, or at least 70, or at least 80, etc.

In embodiments, the detecting of peaks relates to detecting at least one peak, preferably two or more peaks. The number of detected peaks may be at least 1, or at least 2, or at least 3, or at least 4, or at least 5, or at least 6, or at least 7, or at least 8, or at least 9, at least 10, or at least 20, or at least 30, or at least 40, or at least 50, or at least 60, or at least 70, or at least 80, etc.

In embodiments, the NN may have been trained on zones corresponding to subranges of respective wavelength ranges in respective optical spectra. For example, the optical spectra comprise a first optical spectrum and a second optical spectrum and the zones comprises first and second zones, the first zones corresponding to first subranges of a first wavelength range in the first optical spectrum and the second zones corresponding to second subranges of a second wavelength range in the second optical spectrum. It may be that the first and second wavelength ranges are equal or that the wavelength range of the obtained optical spectrum is equal to the wavelength range of any of the first and second wavelength ranges.

In embodiments, the detecting of peaks relates to detecting a subset of peaks which adhere to certain criteria. For example, peaks with measured intensity values above a predetermined threshold (such as, the strongest peaks), the Full Width Half Maximum (FWHM) or Full Width Tenth Maximum (FWTM) or Half Width at Half Maximum (HWHM) being above a predetermined threshold (such as the broadest FWHM or FWTM or HWHM), the FWHM or FWTM or HWHM being below a predetermined threshold (such as the narrowest FWHM or FWTM or HWHM), etc.

In embodiments, the optical spectrum comprises an array of measured intensity values. The intensity values may be provided for each wavelength in the wavelength range. The intensity values may correspond to respective channels of the at least one spectrometer and may be measured by the at least one detector or detector-array.

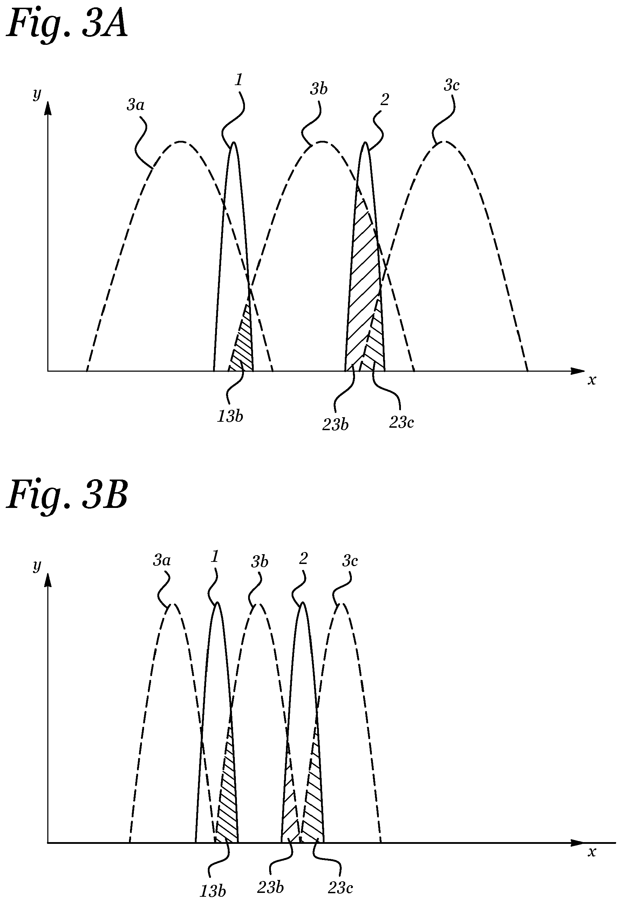

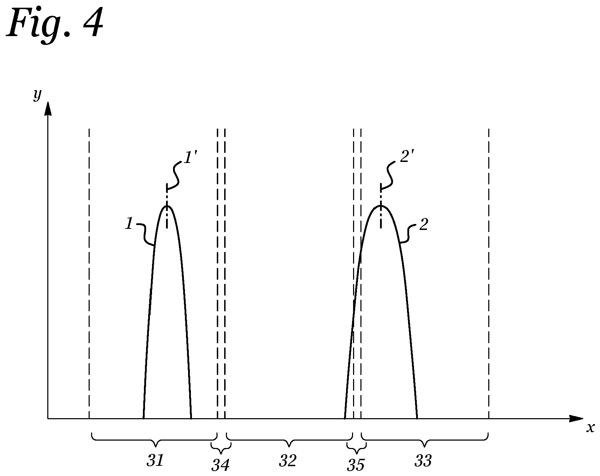

In particularly advantageous embodiments, the measured intensity values correspond to respective channels of the at least one spectrometer, wherein at least two of said channels overlap. For example, an arrayed waveguide grating (AWG) spectrometer is divided into overlapping channels. In another example, a first spectrometer relates to first channel(s) overlapping with any of second channel(s) to which a second spectrometer relates. This allows the at least one optical spectrometer to comprise overlapping channels. Wider overlapping channels are typically used to better detect peaks using less channels, in comparison to using narrow channels which require more channels which can be difficult to implement in integrated photonics (e.g., due to the miniature size and complexity of spectrometers and the challenging aspects of integrating more optical interconnects). However, the disadvantage of overlapping channels is that with overlapping peaks or peaks getting closer (in optical wavelength value), detection of said peaks becomes more difficult. The prior art would therefore require increasing the complexity of training the models which is not efficient, and in many cases not effective. Such embodiments may advantageously allow for improved identification of peaks that are overlapping or very close (in optical wavelength value), compared to traditional peak detection methods, such as weighted average which is particularly relevant in spectrometers with overlapping channels. The inventors have shown that by applying the NN on the optical spectrum to detect the peaks therein, peak interference can be smoothed or cancelled out. Thus, the invention provides a more reliable and efficient solution, while ensuring that less channels are used, e.g., in cases where it is difficult to have more pixels or higher-resolution detectors. An example embodiment is described in detail in Example 3 below with reference to Fig. 3A, 3B and 4.

In embodiments, the training dataset comprises optical spectra each of which includes or is divided into zones. Thus, the NN may have been trained on the optical spectra, particularly on the zones corresponding to subranges of the wavelengths ranges in the respective of the optical spectra. For example, the optical spectra comprise a first optical spectrum and a second optical spectrum and the zones comprises first and second zones, the first zones corresponding to first subranges of a first wavelength range in the first optical spectrum and the second zones corresponding to second subranges of a second wavelength range in the second optical spectrum. It may be that the first and second wavelength ranges are equal.

In embodiments, the zones are non-overlapping. In preferred embodiments, the zones, particularly consecutive zones, have a gap therebetween. By providing non-overlapping zones and/or providing a gap therebetween, the detection of peaks is improved by ensuring that the same peaks are not detected in multiple zones. The gap may have a width of less than or equal to 5 nm, preferably less than or equal to 3 nm, more preferably less than or equal to 1 nm. Examples of the gap widths include less than or equal to any one of the following: 5 nm, 4.5, nm, 4 nm, 3.5 nm, 3 nm, 2.5 nm, 2 nm, 1.5 nm, 1 nm, 0.5 nm, 0.1 nm, etc. Reducing the width of the gap allows to include more zones, and thereby, detect more peaks. In contrast, the prior art, such as weighted average algorithms, suffers from low accuracy of peak detection when peaks are close to each other. For example, with a spectrometer with 64 overlapping channels and a wavelength range or free spectral range (FSR) of 50 nm and 64 detectors, traditional algorithms may require a minimum peak distance of 3.5 nm. This means a maximum of 10 peaks can be detected on 50 nm with 1.5 nm usable spectrum per peak, and thus, 70% of the spectrum is unusable or "lost". In fiber optic sensing applications, where a fiber optic sensor is capable of measuring temperatures of up to 500°C or more, this would nonetheless imply a limiting maximum shift of 1500 pm or a maximum of 150°C.

In embodiments, any two or more of the zones are overlapping. Preferably, all the zones are overlapping. The advantage of overlapping zones is that peaks can "travel" over a wider spectrum range (when compared to non-overlapping zones), i.e., from one zone to another. This can allow the unrestricted selection of the position of the peaks (i.e., sensors) within the spectrum range. This is not the case with non-overlapping zones, where the sensors are, for example, all located at the centrum of the range so they can move up and down with lower or higher temperatures and cannot be detected if they travel into the gap between zones.

In embodiments, a peak is detected in two or more zones, particularly consecutive (overlapping or non-overlapping) zones. In preferred embodiments, the two or more zones are overlapping. The detecting of the peak may comprise detecting the wavelength of said peak by any one of the following: selecting any a wavelength of any one of the two or more zones, calculating a mean value of the wavelengths of the two or more zones, calculating a median value of the wavelengths of the two or more zones, selecting a wavelength of zone classified as the zone with the peak wherein the other of the two or more zones are classified as not having the peak.

In embodiments, any two or more zones have an overlapping range greater than or equal to any of the following: 0 nm, 0.1 nm, 0.2 nm, 0.3 nm, 0.4 nm, 0.5 nm, 1 nm, 1.5 nm, etc. In this case, the gap between consecutive zones may be respectively less than or equal to any of the following: 0 nm, -0.1 nm, -0.2 nm, -0.3 nm, -0.4 nm, -0.5 nm, -1 nm, -1.5 nm, etc. For example, first two zones overlap with an overlapping range of 0.1 nm and second two zones overlap with 0.2 nm. In another example, first two zones overlap with an overlapping range of 0.1 nm and second three zones do not overlap.

In particularly advantageous embodiments, the trained NN comprises a regression model trained on a training dataset comprising optical spectra and associated arrays of intensity values, wherein the training of the NN relates to adding dummy values to account for any one or plurality of empty zones. This increases the accuracy of detecting peaks in a simple and efficient manner. The dummy value may be a value outside the wavelength range of the respective zone, such as a negative value or a predetermined value (e.g., 0.01 nm, 0.05 nm, 0.1 nm, 0.15 nm, 0.2 nm, etc.) in addition to the upper limit of the wavelength range of the respective zone.

In embodiments, the trained NN comprises a regression model for detecting the wavelengths of peaks in the optical spectrum, and a classification model for classifying or detecting empty zones and/or zones with peaks. This ensures that the regression model is applied only on subranges corresponding to the zones with peaks, and thereby, providing a simplified and efficient regression model. In particularly advantageous embodiments, the classification model is applied before the regression model. Alternatively, the regression model is applied before the classification model. Preferably, the classification model and the regression model are applied in parallel. For example, the classification model classifies zones without peaks as empty zones, and the regression model only detects the peaks in any of the other zones. Alternatively, this can ensure that the classification model is applied on the result of the regression model to more effectively detect peaks and/or empty zones. For example, the classification model can classify that a peak is detected in a first zone and not in a second zone based on the output of the regression model. Empty zones may be understood as zones not comprising a peak or wherein the intensity values are below a predetermined threshold.

In embodiments, the trained NN comprises the regression model for detecting the wavelengths of peaks in the optical spectrum and at least two classification models for classifying or detecting empty zones and/or zones with peaks. The at least two classification models comprise a first and a second classification model, wherein the first classification model may be applied before the regression model and the second classification model may be applied after the regression model. In particularly advantageous embodiments, each of the at least two classification models has been trained w.r.t non-consecutive zones. The at least two classification models may be applied before or after the regression model. This is particularly advantageous when peaks are located at zone borders or endpoints of the zones and detected in multiple zones (i.e., neighboring zones), thus, reducing the number of peaks detected in multiple zones, and thereby, increasing accuracy of detecting peaks. For example, the classification model in the trained NN is split into two classification models trained w.r.t interlacing zones, such as the first classification model having been trained w.r.t zones with odd-numbered indices and the second classification model having been trained w.r.t zones with even-numbered indices. In another example, the classification models have been trained w.r.t a vector of zone indices permuted such that consecutive elements of the vector are non-consecutive or non-neighboring zone indices, such as the vector of zone indices [0, 2, 4, 1, 3, 5]. In alternative advantageous embodiments, each of the at least two classification models has been trained w.r.t consecutive zones. The at least two classification models may be applied before or after the regression model.

In embodiments, the trained NN comprises at least two regression models for detecting the wavelengths of peaks in the optical spectrum. The at least two regression models comprise a first and a second regression model, wherein the first regression model may be applied before the classification model and the second regression model may be applied after the classification model. In particularly advantageous embodiments, each of the at least two regression models has been trained w.r.t non-consecutive zones. The at least two regression models may be applied before or after the classification model. This is particularly advantageous when peaks are located at zone borders or endpoints of the zones and detected in multiple zones (i.e., neighboring zones), thus, reducing the number of peaks detected in multiple zones, and thereby, increasing accuracy of detecting peaks. For example, the regression model in the trained NN is split into two regression models trained w.r.t or on interlacing zones, such as the first regression model having been trained w.r.t zones with odd-numbered indices and the second regression model having been trained w.r.t zones with even-numbered indices. In another example, the regression models have been trained w.r.t a vector of zone indices permuted such that consecutive elements of the vector are non-consecutive or non-neighboring zone indices, such as the vector of zone indices [0, 2, 4, 1, 3, 5]. In alternative advantageous embodiments, each of the at least two regression models has been trained w.r.t consecutive zones. The at least two regression models may be applied before or after the classification model.

In embodiments, the trained NN comprises the at least two regression models for detecting the wavelengths of peaks in the optical spectrum and the at least two classification models for classifying or detecting empty zones and/or zones with peaks. In particularly advantageous embodiments, each of the at least two regression models has been trained w.r.t non-consecutive first zones, and each of the at least two classification models have been trained w.r.t non-consecutive second zones. The non-consecutive first zones and the non-consecutive second zones may be the same. For example, the regression models have been trained w.r.t a vector of zone indices permuted such that consecutive elements of the vector are non-consecutive or non-neighboring zone indices, such as the vector of zone indices [0, 2, 4, 1, 3, 5], and the classification models have been trained w.r.t a vector of zone indices permuted such that consecutive elements of the vector are non-consecutive or non-neighboring zone indices, such as the vector of zone indices [1, 3, 5, 0, 2, 4]. In alternative advantageous embodiments, each of the at least two regression models has been trained w.r.t consecutive first zones, and each of the at least two classification models have been trained w.r.t consecutive second zones. The non-consecutive first zones and the non-consecutive second zones may be the same.

In embodiments, the detection of peaks relates to the plurality of output nodes of the trained NN. At least one first output node of the plurality of output nodes may output a wavelength value of a detected peak in a respective zone. In preferred embodiments, the at least one first output node comprises at least two first output nodes which output wavelength values of respective detected peaks in the respective zones.

In embodiments, at least one second output node of the plurality of output nodes outputs a dummy wavelength value of an empty zone. In preferred embodiments, wherein at least one classification model is comprised in the NN, said at least one second output node outputs no value (i.e., the empty zone is ignored). The at least one second output node may comprise at least two second output nodes.

In embodiments, the at least two classification models are applied before the at least two regression models. For example, the first classification model is applied before the first regression model, and the second classification model is applied before the second regression model. Alternatively, the at least two regression models are applied before the at least two classification models.

In embodiments, the first classification model is applied before the first regression model and the second regression model ais applied before the second classification model.

In embodiments, the at least two classification models and the at least two regression models are applied in parallel. For example, the first classification model is applied in parallel with the first regression model and the second classification model is applied in parallel with the second regression model.

In particularly advantageous embodiments, the NN has been trained on a training dataset comprising optical spectra having a variable number of peaks. For example, a first optical spectrum is associated with a first number of peaks which is different from a second number of peaks to which a second optical spectrum is associated. By training the NN w.r.t zones, wherein the training dataset comprises optical spectra having a variable number of peaks (i.e., the NN is not specific to optical spectra with a predetermined number of peaks), the NN can more adaptively detect the peaks and is not limited to a predetermined number thereof. Thus, each detected peak can end up at one end node (i.e., output). One problem that limits the prior art is the lack of adaptability of models. Thus, the inventors have found that by generating a training dataset comprising optical spectra with a variable number of peaks, a correspondingly variable number of zones can be left empty. This allows for the training dataset to be adaptable to a variable number of peaks in the optical spectra, and thereby, allows for a more adaptable trained NN.

In embodiments, the zones have a width of less than or equal to 10 nm, preferably less than or equal to 5 nm, more preferably less than or equal to 3 nm. Examples of the zone widths include less than or equal to any one of the following: 10 nm, 9, nm, 8 nm, 7 nm, 6 nm, 5 nm, 4 nm, 3 nm, 2 nm, 1 nm, 0.5 nm, etc. In additional or alternative embodiments, the number of zones is at least one 1, at least 2, at least 3, at least 4, at least 5, at least 6, at least 7, at least 7, at least 8, at least 9, at least 10, at least 20, at least 30, at least 40, at least 50, at least 60, at least 70, at least 80, etc. In additional or alternative embodiments, the number of peaks is at least one 1, at least 2, at least 3, at least 4, at least 5, at least 6, at least 7, at least 7, at least 8, at least 9, at least 10, at least 20, at least 30., at least 40, at least 50, at least 60, at least 70, at least 80, etc.

In embodiments, the number of zones is greater than or equal to the number of peaks, preferably greater than or equal to a multiple of the number of peaks, such as greater than or equal to two times the number of peaks, greater than or equal to three times the number of peaks, greater than or equal to four times the number of peaks, greater than or equal to five times the number of peaks, etc.

In embodiments, the NN has been trained on a training dataset comprising optical spectra including or being divided into zones of variable widths. In one example, a first optical spectrum in the training dataset includes or is divided into first zones any of which has a width is larger than the width of any of second zones in a second optical spectrum in the training dataset. In another example, an optical spectrum in the training dataset includes or is divided into a first zone and a second zone, wherein the width of the first zone is larger than the width of the second zone.

In embodiments, the training dataset comprises an optical spectrum divided into zones having an equal width. In preferred embodiments, all the zones in said optical spectrum have an equal width. In more preferred embodiments, each of the optical spectra in the training dataset includes or is divided into zones having an equal first width. In one example, a first optical spectrum in the training dataset includes or is divided into first zones having an equal first width, and a second optical spectrum in the training dataset includes or is divided into second zones having an equal second width, wherein the first width is greater than the second width.

In embodiments, the NN has been trained w.r.t a plurality of steps, preferably steps with variable resolution. For example, the NN has been trained w.r.t a first step and on a second step different from the first step, such as a first step being a coarse resolution step (i.e., several nanometers to tens of nanometers) and a second step being a higher resolution step (i.e., sub-nanometers to sub-picometers) than the first resolution step. Since the choice of resolution can depend on the application and the details that need to be extracted from the spectral data, the present invention is not limited to a fixed or a single resolution.

In embodiments, the NN has been trained w.r.t a plurality of steps in a particular order, such as from low to high resolution or vice versa. In one example, the training of the NN on the higher resolution step has been performed subsequent to the training of the NN on the coarse resolution step. Different instruments, such as grating-based spectrometers, interferometers, or Fabry-Perot interferometers, can provide variable levels of resolution. Thus, the present invention allows to detect peaks in optical spectra where the resolution varies. For example, the optical spectrum comprises a first part and a second part, wherein the first part comprises a first wavelength subrange of coarse resolution and the second part comprises a second wavelength subrange of higher resolution. This allows for a combination of spectrometers with different resolutions to ensure improved sensing of a wide wavelength range and higher sensitivity.

In embodiments, the NN is trained w.r.t optical spectra comprising variable wavelength ranges. Thus, at least two optical spectra may have different wavelength ranges. For example, the optical spectra comprise a first optical spectrum and a second optical spectrum, with the first optical spectrum having a first wavelength range and the second optical spectrum having a second wavelength range, wherein the first wavelength range is different from the second wavelength range. This allows the method to improve the training of the NN on different ranges and make the method more flexible to different inputs of optical spectra. In this example, the optical spectra comprise a third optical spectrum having a third wavelength range which is the same as the first wavelength range.

In embodiments, the method relates to fiber optic sensing. In embodiments, the system is a fiber optic sensing system. Example embodiments of fiber optic sensing and fiber optic sensing systems are provided below.

In embodiments, the at least one optical spectrometer comprises at least one detector, preferably at least one detector array. For example, a first optical spectrometer comprises a first detector array and a second optical spectrometer comprises a second detector array. The at least one detector array may comprise detectors or detector arrays with different measurement wavelength ranges. For example, a first detector array with a first measurement wavelength range larger than a second measurement wavelength range of a second detector array. The at least one detector or the at least one detector array may comprise a photodiode detector (PD) or a Charge-Coupled Device (CCD) detector, e.g., a PD detector array in a Raman spectrometer.

In embodiments, the at least one optical spectrometer comprises at least one dispersing element. The at least one dispersing element may comprise any of: diffraction grating, Echelle grating, planar concave grating, arrayed waveguide grating (AWG), etc.

In embodiments, at least one reflector is configured to receive the light and reflect it back to respective of the at least one dispersing element of the at least one spectrometer. The respective of the at least one reflector may be comprised in or connected to the respective of the at least one spectrometer. The reflector may be a distributed Bragg reflector, e.g., a Fiber Bragg Grating (FBG), configured to reflect particular wavelengths of light, while the other wavelengths of light are transmitted. The reflector may be used as a sensor, e.g., sensitive to temperature. The system may be a measurement or data acquisition system, such as an optical interrogator, which is an optoelectronic instrument comprising an optical FBG sensor.

In embodiments, the system comprises the at least one optical spectrometer further comprising the at least one reflector, wherein the spectrometer receives light from the reflector. An example of the system is a spectrometer based FBG interrogator, where the reflector is an FBG illuminated by light, and where the spectrometer receives a narrow wavelength band around a Bragg wavelength reflected and guided via an optical circulator to the spectrometer. The spectrometer receives the reflected light through an input interface which may be an (input or output) aperture waveguide. Alternatively, the input interface may be an entrance slit and/or collimator. The spectrometer may be an AWG spectrometer, such as the AWG in document WO2016005418A1. In a further example, the spectrometer comprises a dispersing element which is an AWG and may be used for wavelength division multiplexing. Alternatively, the spectrometer is a diffraction grating spectrometer, and the dispersing element in the spectrometer is a diffraction grating which images the sensor spectrum linearly onto the detector being a CCD line array. The spectrometer may be configured to provide a spectral output, e.g., values of intensity as a function of CCD detectors per wavelength.

The system may comprise a circulator unit having an optical circulator configured for guiding light to the reflector through an input-output interface of the circulator unit. Furthermore, the optical circulator may be configured to guide light reflected by the reflector back through the input-output interface of the circulator unit to the spectrometer through an output interface of the circulator unit. The spectrometer may receive the reflected light through the input interface.

In embodiments, the device and/or the system relate to structural health monitoring, wherein a sensor measurement is provided to the device and/or system. For example, bridges, dams, tunnels and buildings can be equipped with fiber optic sensors for continuous structural health monitoring. Fiber sensors mounted in or onto concrete or steel structures may be used to predict and detect small defects early on. Preventive maintenance can then be performed to avoid structural damage to the infrastructure.

In embodiments, the device and/or the system relate to bearing condition monitoring, wherein a sensor measurement is provided to the device and/or system. Bearings may be equipped with fiber optic sensors to bring the benefits of fiber optic sensing to ships, trains, trucks, and heavy construction equipment. Continuous load sensing improves the efficiency of rotating equipment, while lifetime prediction and early failure detection prevent damage to the bearings and more importantly to expensive surrounding parts like gearboxes and engines.

In embodiments, the device and/or the system relate to wind turbines, wherein a sensor measurement is provided to the device and/or system. Fiber optic sensors may be installed on blades, bearings, gearbox, tower, and jacket of wind turbines to predict, detect and prevent failures before they lead to costly repairs. Equally important fiber optic sensors embedded in the blades may be used to monitor and increase the efficiency of the turbine.

In embodiments, the device for detecting peaks comprises a memory including the trained neural network, NN, wherein the NN has been trained on the training dataset comprising optical spectra and associated arrays of intensity values. Preferably, the NN has been trained w.r.t zones corresponding to subranges of the wavelength range in the respective optical spectra.

According to a further aspect, the present invention provides a computer program comprising instructions which, when the program is executed by a computer, cause the computer to carry out the method for detecting peaks according to the invention. The computer program product may comprise at least one readable medium in which computer-readable program code portions are saved, with program code portions comprising instructions for carrying out said method.

According to a further aspect, the present invention provides a computer-readable medium comprising instructions which, when executed by a computer, cause the computer to carry out the method for detecting peaks according to the invention.

In a further aspect of the invention, there is provided a computer-implemented method for training a NN for detecting peaks in an optical spectrum, the method comprising:
- receiving an input training dataset comprising optical spectra and associated arrays of intensity values; and
- training the NN on the received input training dataset,
   wherein the optical spectra comprise (or are divided into) zones corresponding to subranges of the wavelength range of the respective of optical spectra.

In a further aspect of the invention, there is provided a device comprising means for carrying out the method for training the NN according to the invention.

In a further aspect of the invention, there is provided a system comprising a first device and a second device for training the NN according to the invention.

In embodiments, the first device comprises means for training a first NN which comprises a classification model for classifying or detecting empty zones, and the second device comprises means for training a second NN which comprises at least one regression model for detecting the wavelengths of peaks in the optical spectrum.

In a further aspect of the invention, there is provided a computer program comprising instructions which, when the program is executed by a computer, cause the computer to carry out the method for training the NN according to the invention. The computer program product may comprise at least one readable medium in which computer-readable program code portions are saved, which program code portions comprise instructions for carrying out said method.

In a further aspect of the invention, there is provided a computer-readable medium comprising instructions which, when executed by a computer, cause the computer to carry out the method for training the NN according to the invention.

In a further aspect of the invention, there is provided a use of a trained NN for detecting peaks in an optical spectrum according to the invention.

In embodiments, the use of the trained NN in any one or combination of structural health monitoring, bearing condition monitoring, wind turbine monitoring, and other monitoring or detection applications.

In embodiments, the NN is an artificial NN (ANN), such as any one of a feedforward NN (FNN), a recurrent NN (RNN), a convolutional NN (CNN).

In preferred embodiments, the NN is a multi-task NN which involves separate output branches for each task. In one example, the loss function used during training may be a combination (e.g., weighted sum) of the regression loss (e.g., Mean Squared Error for regression tasks) and the classification loss (e.g., Cross-Entropy Loss for classification tasks). In another example, the loss function includes a combination of two or more regression loss functions and/or two or more classification loss functions. The weights can be adjusted based on the relative importance of each task. The layers of the NN may involve feature extraction.

### Examples

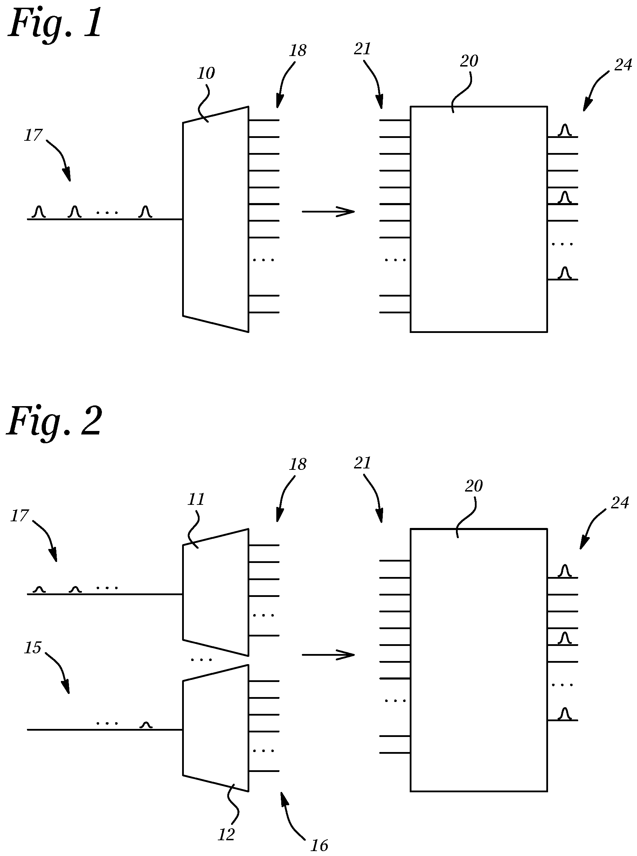

Example embodiments of the invention will be described with reference to Fig. 1, 2, 3a, 3b, 4, which are not intended to limit the scope of the invention in any way.

### Example 1: example of a system or method according to the invention

This example is described with reference to Fig. 1. In this example according to embodiments of the invention, a system comprises an optical spectrometer 10 and a device 20. The optical spectrometer 10 receives light 17 comprising a plurality of peaks. The optical spectrometer 10 comprises a number of channels corresponding to different wavelengths. A detector or array of detectors captures the light intensity at different wavelengths from the channels and converts it into data. The resulting data is in the form of an optical spectrum 18 which is represented by the intensity values captured by a detector or detector array for a wavelength range.

In this example, the method according to the invention comprises obtaining, by the device 20, the optical spectrum 18 from the optical spectrometer 10; providing the optical spectrum 18 to the input nodes 21 of a trained NN to detect peaks in the optical spectrum 18; providing the detected peaks at the output nodes 24 of the trained NN.

In this example, the number of output nodes 24 is equal to the number of zones of unique wavelength ranges. As can be seen, the number of detected peaks is less than or equal to the number of zones.

### Example 2: example of a system or method according to the invention

This example is described with reference to Fig. 2. In this example according to embodiments of the invention, the system comprises a first optical spectrometer 11, a second optical spectrometer 12 and a device 20. The first optical spectrometer 11 receives first light 17 from a first light source, the first light 17 comprising a plurality of peaks. The second optical spectrometer 12 receives second light 15 from a second light source. The first light 17 and the second light 15 each comprise a plurality of peaks. It may be that the first and second optical spectrometers 11, 12 receive light from a single light source.

In this example, the first and second optical spectrometers 11, 12 comprise overlapping channels.

A first detector (or first detector array) comprised in or connected to the first optical spectrometer 11 captures the light intensity from the channels of the first optical spectrometer 11 coming from the first light 17 at different wavelengths and converts it into data. The resulting data is in the form of a first optical spectrum 18 which is represented by the intensity values captured by any detector comprised in or connected to the first optical spectrometer 11 for a wavelength range. A second detector (or second detector array) comprised in or connected to the second optical spectrometer 12 captures the light intensity from the channels of the second spectrometer 12 coming from the second light 15 at different wavelengths and converts it into data. The resulting data is in the form of a second optical spectrum 16 which is represented by the intensity values captured by any detector or detector array comprised in or connected to the second optical spectrometer 12 for a wavelength range.

In this example, the method according to the invention comprises obtaining, by the device 20, the first optical spectrum 18 and the second optical spectrum 16 from the first optical spectrometer 11 and the second optical spectrometer 12, respectively; providing the first optical spectrum 18 and the second optical spectrum 16 to the input nodes 21 of a trained NN to detect peaks in the optical spectra 16, 18; providing the detected peaks at the output nodes 24 of the trained NN.

In this example, the number of output nodes 24 is equal to the number of zones of unique wavelength ranges. As can be seen, the number of detected peaks is less than or equal to the number of zones.

### Example 3: example of a method according to the invention

This example is described with reference to Fig. 3A, 3B, and 4. In this example according to embodiments of the invention, the method comprises obtaining an optical spectrum from at least one optical spectrometer. The optical spectrum comprises a wavelength range, wherein wavelength values are shown in Fig. 3A on the x-axis and the intensity values for each wavelength value in the wavelength range are shown on the y-axis.

As is shown in Fig. 3A, the optical spectrum comprises a plurality of peaks, particularly a first peak 1 and a second peak 2. A first spectrometer comprises a first channel 3a, a second channel 3b and a third channel 3c. In this example, the channels of the first spectrometer overlap.

As is shown in Fig. 3A, the second peak 2 has a first and second intensity values 23b, 23c respectively at the second and third channels 3b, 3c. With a weighted average on the second and third channels 3b, 3c, the wavelength of the second peak 2 can be determined. However, typically peaks are usually closer to each other and in some cases overlap. As can be seen in Fig. 3A, the first peak 1 which comes close to the second peak 2, also has a third intensity value 13b at the second channel 3b. This causes the prior art approaches, such as the weighted average approach, the center of gravity approach or the interpolation approach to output an error or a wrong calculation of the wavelength of the second peak 2.

The wider overlapping channels 3a-3c shown in Fig. 3A are typically used to better detect peaks using less channels, but with overlapping peaks or peaks getting closer, detection of said peaks becomes more difficult. The inventors have shown that by applying the NN on the optical spectrum to detect the peaks therein, peak interreference can be smoothed or cancelled out. Thus, the invention provides a more reliable and efficient solution, while ensuring that less channels are used, e.g., in cases where it is difficult to have more pixels or higher-resolution detectors. An example embodiment is described in detail in Example 3 below with reference to Fig. 3A, 3B and 4.

In Fig. 3B, narrower non-overlapping channels 3a-3care used. Here, the peaks 1,2 of Fig. 3A would be better detected by the narrower non-overlapping channels 3a-3c, However, more channels would be required to detect peaks over the whole spectrum. This may be difficult to implement especially in integrated photonics. Furthermore, the closer the peaks are to each other, the more difficult the detection of said peaks becomes, similar to the problem of Fig. 3A. This is shown in Fig. 3B, where the second peak 2 has a first and second intensity values 23b, 23c respectively at the second and third channels 3b, 3c. With, e.g., a weighted average on the second and third channels 3b, 3c, the wavelength of the second peak 2 can be determined. However, since the first peak 1 comes closer to the second peak 2, the first peak 1 also has a third intensity value 13b at the second channel 3b. This causes the weighted average approach to output an error or a wrong calculation of the wavelength of the second peak 2.

Similarly, the same can also be also visualized with respect to peak 1 being detected. In this example, the first peak 1 has a third and fourth intensity values respectively on the second and first channels 3a, 3b, and where the second peak 2 is close to the first peak 1 has a first intensity value 23b on the second channel 3b. Thus, for the same reasons as described above, e.g., the weighted average approach would also suffer from inadequate peak detection of the first peak 1.

A solution to these problems is described with reference to Fig. 4. In this example according to embodiments of the invention, the method comprises applying a trained NN to detect the peaks in the optical spectrum, wherein the detecting of peaks relates to output nodes of the NN having been trained w.r.t zones corresponding to subranges of the wavelength range. The NN has been trained on a training dataset comprising optical spectra containing one or more peaks, wherein the training has been performed w.r.t zones.

Fig. 4 shows an optical spectrum from among the optical spectra, which may be similar to the optical spectrum described with reference to Fig. 3A, 3B. Said optical spectrum comprises a first peak 1 with a first wavelength 1' and a second peak 2 with a second wavelength 2', the first and second peaks 1, 2 having variable peak widths (e.g., FWHM). Said optical spectrum includes a first zone 31, a second zone 32 and a third zone 33, wherein the first and second zones 31, 32 have a first gap 34 therebetween, and the second and third zones 32, 33 have a second gap 35 therebetween. The first wavelength 1' of the first peak 1 falls within the endpoints of the first zone 31 and the second wavelength 2' of the second peak 2 falls within the endpoints of the third zone 33. The second zone 32 contains no wavelength of any of the peaks and is empty.

In this example, we now assume that the first zone 31 has a first wavelength range of 1525-1526.1 nm (i.e., a width of 1.1 nm), the second zone 32 has a second wavelength range of 1526-1527.1 nm (i.e., a width of 1.1 nm), and the third zone 33 has a third wavelength range of 1527-1528.1 nm (i.e., a width of 1.1 nm), wherein the first zone 31 has a 0.1 nm overlap with the second zone 32 and the second zone 32 has a 0.1 nm overlap with the third zone 33, and wherein each of the first and second gaps 34, 35 has a width of -0.1 nm.

In a first case, shown in Fig. 4, the first peak has a first wavelength 1' of 1525.7 nm and the second peak has a second wavelength 2' of 1527.2 nm. Thus, the first peak 1 is detected in the first zone 31 and the corresponding output of the NN, i.e. the first output node , is a value of 1525.7 nm, the second peak 2 is detected in the third zone 33 and the corresponding output of the NN, i.e. the third output value, is a value of 1527.2 nm, and since there is no peak in the second zone 32, the corresponding output of the NN, i.e. the second output value, is a dummy value (e.g., 1527.15 nm, which is outside the second wavelength range) or if a classification model is comprised in the NN, then the second zone 32 is classified as not having any peaks and will be ignored.

In a second case, where the second peak 2 gets closer to the first peak 1, the first peak still has a first wavelength 1' of 1525.7 nm and the second peak now has a second wavelength 2' of 1527.05 nm, which falls in the overlap of the second and third zones 32, 33 (i.e., in the second gap 35). Thus, the first peak 1 is detected in the first zone 31 and the corresponding output of the NN, i.e. the first output value, is a value of 1525.7 nm. Here, the second peak 2 is detected in both the second and third zones 32, 33 and the corresponding outputs of the NN, i.e. each of the second and third output values, is a value of 1527.05 nm. In this case, the second peak 2 is detected by two zones, which results in output values at two output nodes of the NN. To avoid this being interpreted as two different peaks, one of the second and third zones 32, 33 is then (randomly) ignored. This may be possible since the output values at the two output nodes are the same or very close (i.e., closer than the minimum allowed spacing between peaks). Alternatively, an average output value of the output values at two output nodes is performed, in this case, since both output values are the same, the average (e.g., mean) is the same value. Alternatively, a classification model is included in the NN and would classify one of the second and third zones 32, 33 as empty, and the output node ignores said classified zone.

In a third case, where the second peak 2 moves even closer to the first peak 1, the first peak still has a first wavelength 1' of 1525.7 nm and the second peak has a new second wavelength 2' of 1526.5 nm. Thus, the first peak 1 is detected in the first zone 31 and the corresponding output of the NN, i.e. the first output node , is a value of 1525.7 nm, the second peak 2 is detected in the second zone 32 and the corresponding output of the NN, i.e. the second output value, is a value of 1526.5 nm, and since there is no peak in the third zone 33, the corresponding output of the NN, i.e. the third output value, is a dummy value (e.g., 1528.2 nm, which is outside the third wavelength range) or if a classification model is comprised in the NN, then the third zone 33 is classified as not having any peaks and will be ignored.

Thus, by applying the trained NN on the optical spectrum, the peaks 1, 2 can be effectively detected, particularly in cases where the peaks get close to each other or even overlap. Furthermore, by allowing the zones 31-33 to overlap, the peaks 1, 2 can be even more effectively detected.

### (End of Example 3)

Although the present invention has been described above with reference to certain embodiments thereof, it will be evident that various modifications and changes may be made to these embodiments without departing from the broader scope of the present invention, as defined by the appended claims.

## Claims

1. A method for detecting peaks in an optical spectrum, the method comprising the steps of:
- obtaining the optical spectrum from at least one optical spectrometer, the optical spectrum comprising a wavelength range; and
- applying a trained neural network, NN, on the optical spectrum to detect the peaks in the optical spectrum,
wherein the detecting of peaks relates to output nodes of the NN having been trained w.r.t zones corresponding to subranges of the wavelength range.

2. The method according to claim 1, wherein the optical spectrum comprises an array of measured intensity values.

3. The method according to claim 2, wherein the measured intensity values correspond to respective overlapping channels of the at least one spectrometer.

4. The method according to any of claims 1-3, wherein the zones are non-overlapping.

5. The method according to claim 4, wherein consecutive zones have a gap therebetween, wherein the gap has a width of less than or equal to 5 nm, preferably less than or equal to 3 nm, more preferably less than or equal to 1 nm.

6. The method according to any of claims 1-3, wherein the zones are overlapping.

7. The method according to any of claims 1-6, wherein the zones have a width of less than or equal to 10 nm, preferably less than or equal to 5 nm, more preferably less than or equal to 3 nm,
and/or wherein the number of zones is at least 10, preferably at least 20, more preferably at least 30,
and/or wherein the number of peaks is at least 10, preferably at least 20, more preferably at least 30.

8. The method according to any of claims 1-7, wherein the trained NN comprises a regression model trained on a training dataset comprising optical spectra and associated arrays of intensity values, wherein the training of the NN relates to adding dummy values to account for empty zones.

9. The method according to any of claims 1-8, wherein the trained NN comprises a regression model for detecting the wavelengths of peaks in the optical spectrum, and a classification model for detecting empty zones.

10. The method according to any one of claims 1-9, wherein the trained NN comprises at least two regression models each of which having been trained w.r.t non-consecutive zones.

11. The method according to any one of claims 1-10, wherein the NN has been trained on a training dataset comprising optical spectra having a variable number of peaks.

12. A device comprising means for carrying out the method of any one of claims 1-11.

13. The device according to claim 12, comprising a memory including a trained neural network, NN, the NN having been trained w.r.t zones corresponding to subranges of a wavelength range in optical spectra.

14. A system comprising:
a device according to claim 12; and
at least one optical spectrometer,
wherein the device is configured to perform the steps of:
- obtaining an optical spectrum from at least one optical spectrometer, the optical spectrum comprising a wavelength range; and
- applying a trained neural network, NN, on the optical spectrum to detect peaks in the optical spectrum,
wherein the detecting of peaks relates to output nodes of the NN having been trained w.r.t zones corresponding to subranges of the wavelength range.

15. A trained neural network, NN, the NN having been trained w.r.t zones corresponding to subranges of a wavelength range in optical spectra.
